# EUROPÄISCHE PATENTSCHRIFT

(11) **EP 3 258 171 B1**
(45) Veröffentlichungstag und Bekanntmachung des Hinweises auf die Patenterteilung: **14.08.2019**
(21) Anmeldenummer: 17173450.2
(22) Anmeldetag: 30.05.2017
(51) Int. Cl.: F23J 13/04

(54) **ANORDNUNG ZUM VERBINDEN ZWEIER ABSCHNITTSWEISE INEINANDER GESCHOBENER ABGASROHRE**
ASSEMBLY FOR CONNECTING TWO EXHAUST TUBES PARTIALLY PUSHED INTO EACH OTHER
SYSTÈME D'ASSEMBLAGE DE DEUX TUYAUX D'ÉCHAPPEMENT INSÉRÉS PARTIELLEMENT L'UN DANS L'AUTRE

(30) Priorität: 14.06.2016 DE 202016103135 U
(43) Veröffentlichungstag der Anmeldung: 20.12.2017
(73) Patentinhaber: Bernhard Poll Schornsteintechnik GmbH, 26892 Dörpen/Ems (DE)
(72) Erfinder: Poll, Rainer, 26892 Dörpen (DE); Schulte, Werner, 49762 Neusustrum (DE)
(74) Vertreter: Jabbusch, Matthias

(56) Entgegenhaltungen:
- DE-A1- 2 626 715
- DE-A1- 19 847 712
- US-A- 649 097
- US-A- 779 257
- US-A- 1 148 041

## Beschreibung

Die Erfindung betrifft eine Anordnung zum Verbinden zweier abschnittsweise ineinander geschobener Abgasrohre, umfassend ein erstes und ein zweites Abgasrohr, zumindest einen Kniehebelspanner, der an dem Abschnitt des ersten Abgasrohrs angeordnet ist, der auf das andere zweite Abgasrohr aufgeschoben ist, wobei das erste Abgasrohr im Bereich zwischen Anordnungspunkten des Kniehebelspanners zumindest einen Durchbruch hat.

Anordnungen der eingangs genannten Gattung werden zum Aufbau von Abgasrohrleitungen verwendet, beispielsweise von Kaminabgasrohrleitungen. Die einzelnen Abgasrohre können ineinander gesteckt werden, um eine längere Rohrstrecke auszubilden. Auf der Außenseite jedes Kaminrohrs ist dann in dem Bereich, der auf das andere Kaminrohr aufgeschoben ist, ein Kniehebelspanner angeordnet. Mit diesem kann ein Zug auf das außenliegende Abgasrohr ausgebildet werden, um eine kraftschlüssige Verbindung der ineinander geschobenen Abgasrohre zu erreichen.

Eine Ausbildung einer derartigen Anordnung mit einem Kniehebelspanner wird im Innenbereich eines Hauses vorgesehen. Außerhalb des Hauses ist auf eine sichere und langlebige Verbindung zu achten, hier werden im Stand der Technik regelmäßig Spannringe verwendet. Diese sind um die Abgasrohre zu legen und fest anzuziehen. Insofern ist das Vorsehen von Spannringen gegenüber Kniehebelspannern komplizierter, es sind zusätzliche lose Teile handzuhaben.

Aus dem Stand der Technik sind die US 649 097 A und die US 779 257 A bekannt, sie zeigen gattungsgemäße Verbindungen. Dort vorhandene Durchbrüche sind jeweils schlitzförmig ausgebildet.

Der Erfindung liegt die Aufgabe zugrunde, eine eingangs genannte Anordnung auch für das Verlegen von Abgasrohren außerhalb von Gebäuden zu ermöglichen.

Diese Aufgabe ist erfindungsgemäß dadurch gelöst, dass das zweite Abgasrohr in einem dem Durchbruch des ersten Abgasrohrs bei Ineinanderschieben der Abgasrohre zugeordneten Bereich eine Vertiefung aufweist.

Bei der erfindungsgemäßen Anordnung ist auf einem Abgasrohr nicht lediglich ein Kniehebelspanner angeordnet. Vielmehr wird am Abgasrohr selbst eine Veränderung vorgenommen, nämlich ein Durchbruch eingebracht. Dieser Durchbruch ist zwischen den Anordnungspunkten des Kniehebelspanners angeordnet, so dass der Kniehebelspanner diesem Durchbruch zugeordnet ist.

Diese Zuordnung kann vorteilhaft dazu ausgenutzt werden, mit dem Kniehebelspanner durch den Durchbruch hindurch auf das innere Abgasrohr einzuwirken. So kann beispielsweise eine Kraft auf das innere Rohr übertragen werden, so dass sich dadurch ein die Festigkeit der Anordnung insgesamt erhöhender Kraftschluss zwischen dem Kniehebelspanner und dem zweiten inneren Abgasrohr ausbildet.

Zur weiteren Ausbildung der Erfindung ist vorgesehen, dass das zweite innere Abgasrohr in einem dem Durchbruch des ersten Abgasrohrs bei Ineinanderschieben des Abgasrohres zugeordneten Bereich eine Vertiefung in seiner Oberfläche aufweist. Dadurch hat das innere Abgasrohr einen speziellen Bereich zur Anlage von Bauteilen des Kniehebelspanners oder zur Anlage von am Kniehebelspanner zugerüsteten Anbauteilen. Dieser Bereich ist vertieft und somit aus einer z. B. als Abflachung regelmäßig im Schnitt runden Bauform der Abgasrohre herausgenommen. Das Zugmittel oder Anbauteil kann sich an diese Vertiefung anlegen, dadurch wird zwischen den beiden Abgasrohren nicht nur eine kraftschlüssige Verbindung, sondern auch eine formschlüssige Verbindung ausgebildet, die vorteilhaft eine Verdrehsicherheit der ineinander geschobenen Abgasrohre bereitstellt.

Die erfindungsgemäße Anordnung ist als Ersatz für das Verwenden von Spannringen im Außenbereich einsetzbar. Dadurch ergibt sich eine vereinfachte Ausbildung von Abgasrohrleitungen.

Nach einer ersten Weiterbildung der Erfindung ist vorgesehen, dass der Durchbruch eine rechteckige Ausbildung hat und dessen Erstreckung an die Bauform des Kniehebelspanners zwischen seinen Anordnungspunkten angepasst ist. Diese Ausbildung des Durchbruchs und seine Größenausbildung in Anpassung an den Kniehebelspanner verbessert das Einleiten einer Kraft vom Kniehebelspanner auf das innenliegende zweite Abgasrohr. Der Kniehebelspanner kann mit einem Bauteil über eine größere Erstreckung an dem inneren Abgasrohr anliegen, so dass sich eine größere kraftschlüssige Halteverbindung ergibt.

Der Kniehebelspanner weist in seinen Anordnungspunkten vorzugsweise zwei auf dem ersten Abgasrohr angeordnete Sockelbauteile auf, die über ein Zugmittel miteinander verbunden sind. Das Zugmittel ist also ein Bauteil zwischen den auf der Außenseite des ersten Abgasrohres angeordneten Sockelbauteilen, das sich an das innere Abgasrohr anlegen kann. Dazu kann das Zugmittel vorzugsweise ein seinen Umfang vergrößerndes Anbauteil haben. Mit einer entsprechenden Umfangsvergrößerung ist eine größere Kraft auf das innere Abgasrohr übertragbar, beispielsweise durch ein als U-Profil ausgebildetes Anbauteil.

Ein Ausführungsbeispiel der Erfindung, aus dem sich weitere erfinderische Merkmale ergeben, ist in der Zeichnung dargestellt. Es zeigen:
- Figur 1:: eine perspektivische Ansicht zweier ineinander geschobener Abgasrohre;
- Figur 2:: eine Schnittansicht der Abgasrohre gemäß Figur 1; und
- Figur 3:: eine maßstäblich vergrößerte Darstellung der Einzelheit III in Figur 2.

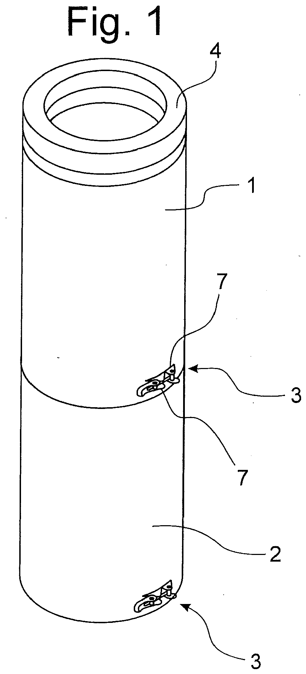

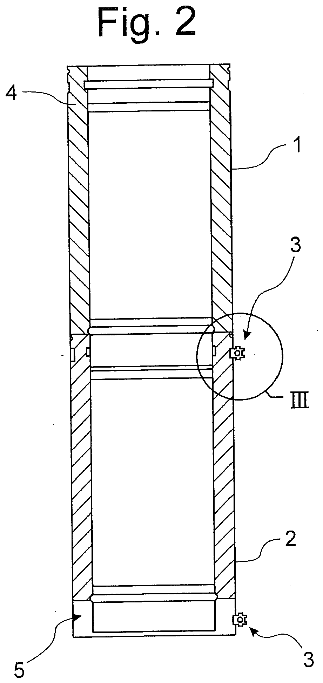

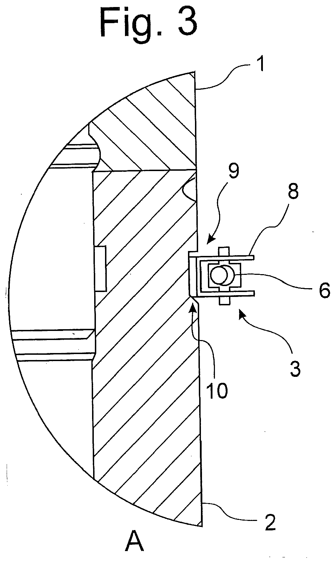

In Figur 1 sind das erste Abgasrohr 1 und das zweite Abgasrohr 2 jeweils mit einem Kniehebelspanner 3 ausgerüstet. Der Kniehebelspanner 3 ist jeweils an einem in Figur 1 unteren Ende der Rohre 1 und 2 angeordnet. Damit befindet sich der Kniehebelspanner 3 des ersten Rohres 1 in einem Abschnitt des ersten Rohres 1, der auf das zweite Rohr 2 aufgeschoben ist, wie Figuren 2 und 3 zeigen.

Figur 2 zeigt, dass jedes Rohr 1, 2 mit Isoliermaterial 4 gefüllt ist. In dem Bereich, in dem ein Rohr 1, 2 auf ein anderes Rohr aufgeschoben werden soll, ist ein von Isoliermaterial freier Bereich 5 vorgesehen. Auf Höhe dieses Bereiches 5 ist jeweils der Kniehebelspanner 3 angeordnet.

Figur 3 zeigt, dass der Kniehebelspanner 3 ein Zugmittel 6 hat. Dieses Zugmittel 6 ist zwischen zwei Sockelbauteilen 7 (Figur 1) angeordnet. Das Zugmittel 6 ist mit einem seinen Umfang vergrößernden Anbauteil 8 ausgerüstet. Dieses Anbauteil 8 ist als U-Profil ausgebildet, dessen Basis den Rohren 1, 2 zugekehrt ist.

Figur 3 zeigt, dass das erste Abgasrohr 1 im Bereich des Kniehebelspanners 3 einen Durchbruch 9 hat. Durch den Durchbruch 9 hindurch kann der Kniehebelspanner 3 mit seinem Zugmittel 6 und dem Anbauteil 8 auf das innenliegende zweite Rohr 2 einwirken. Das Anbauteil 8 ist an dieses Innenrohr 2 anlegbar. Figur 3 zeigt, dass das zweite Rohr 2 im Bereich des Durchbruchs 9 eine Vertiefung 10 hat. In diese Vertiefung 10 hinein ist das Anbauteil 8 mit dem Kniehebelspanner 3 führbar.

## Patentansprüche

1. Anordnung zum Verbinden zweier erster und zweiter abschnittsweise ineinander geschobener Abgasrohre, umfassend ein erstes und ein zweites Abgasrohr, zumindest einen Kniehebelspanner, der an dem Abschnitt des ersten Abgasrohrs angeordnet ist, der auf das andere zweite Abgasrohr aufgeschoben ist, wobei das erste Abgasrohr im Bereich zwischen Anordnungspunkten des Kniehebelspanners zumindest einen Durchbruch hat,
**dadurch gekennzeichnet,**
**dass** das zweite Abgasrohr (2) in einem dem Durchbruch (9) des ersten Abgasrohrs (1) bei Ineinanderschieben der Abgasrohre (1, 2) zugeordneten Bereich eine Vertiefung (10) aufweist.

2. Anordnung nach Anspruch 1, **dadurch gekennzeichnet, dass** der Durchbruch (9) eine rechteckige Ausbildung hat und dessen Erstreckung an die Bauform des Kniehebelspanners (3) zwischen seinen Anordnungspunkten angepasst ist.

3. Anordnung nach Anspruch 1 oder 2, **dadurch gekennzeichnet, dass** der Kniehebelspanner (3) in seinen Anordnungspunkten auf dem ersten Abgasrohr (1) zwei Sockelbauteile (7) hat, die über ein Zugmittel (6) miteinander verbunden sind.

4. Anordnung nach Anspruch 3, **dadurch gekennzeichnet, dass** das Zugmittel (6) ein seinen Umfang vergrößerndes Anbauteil (8) aufweist.

5. Anordnung nach Anspruch 4, **dadurch gekennzeichnet, dass** das Anbauteil (8) als U-Profil ausgebildet ist.

## Claims

1. An assembly for connecting two first and second exhaust pipes partially pushed into each other, comprising a first exhaust pipe and a second exhaust pipe, at least one toggle clamp, which is arranged on the section of the first exhaust pipe which is pushed onto the other, second exhaust pipe, wherein the first exhaust pipe has at least one opening in the area between mounting points of the toggle clamp,
**characterized in that**
the second exhaust pipe (2) has a recess (10) in an area associated with the opening (9) of the first exhaust pipe (1) when the exhaust pipes (1, 2) are pushed into each other.

2. The assembly according to Claim 1, **characterized in that** the opening (9) has a rectangular form and that its extension is adapted to the structural shape of the toggle clamp (3), between the mounting points thereof.

3. The assembly according to Claim 1 or 2, **characterized in that** in its mounting points on the first exhaust pipe (1), the toggle clamp (3) has two base components (7) which are interconnected by means of a traction means (6).

4. The assembly according to Claim 3, **characterized in that** the traction means (6) has an attachment part (8) which enlarges its periphery.

5. The assembly according to Claim 4, **characterized in that** the attachment part (8) is configured as a U-channel.

## Revendications

1. Système d'assemblage de deux tuyaux d'échappement, un premier et un deuxième, insérés partiellement l'un dans l'autre, comprenant un premier et un deuxième tuyau d'échappement, au moins un serrage à genouillère, qui est disposé sur la section du premier tuyau d'échappement, qui est enfilé sur l'autre deuxième tuyau d'échappement, sachant que le premier tuyau d'échappement possède au moins un passage dans la zone située entre les points de montage du serrage à genouillère,
**caractérisé en ce que**
le deuxième tuyau d'échappement (2) comporte une cavité (10) dans une zone attribuée au passage (9) du premier tuyau d'échappement (1) lors de l'insertion des tuyaux d'échappement (1, 2) l'un dans l'autre.

2. Système selon la revendication 1, **caractérisé en ce que** le passage (9) possède une configuration rectangulaire et l'extension de celui-ci est adaptée à la forme de construction du serrage à genouillère (3) entre ses points de montage.

3. Système selon la revendication 1 ou 2, **caractérisé en ce que** le serrage à genouillère (3) possède dans ses points de montage sur le premier tuyau d'échappement (1) deux composants de socle (7), qui sont reliés l'un à l'autre par le biais d'un moyen de traction (6).

4. Système selon la revendication 3, **caractérisé en ce que** le moyen de traction (6) comporte une pièce de montage (8) agrandissant sa périphérie.

5. Système selon la revendication 4, **caractérisé en ce que** la pièce de montage (8) est constituée sous la forme d'un profilé en U.
